# EUROPEAN PATENT APPLICATION

(11) **EP 1 594 276 A1**
(43) Date of publication of application: **09.11.2005**
(21) Application number: 04022747.2
(22) Date of filing: 24.09.2004
(51) Int. Cl.: H04L 29/06

(54) **Client-server-communication system**

(30) Priority: 04.05.2004 US 837631
(71) Applicant: HOB GmbH & Co. KG, 90556 Cadolzburg (DE)
(72) Inventor: Brandstätter, Klaus, 90574 Rosstal (DE)
(74) Representative: Hübner, Gerd

(57) **Abstract**

A client-server-communication comprises at least one internet-based client and at least one intranet-based server located in an intranet system. A demilitarized zone is defined between an outbound firewall system to the internet and an inbound firewall system to the intranet system. A proxy server is located in this demilitarized zone and provides for any communication connection to at least one of the intranet-based servers required from one of the internet-based clients.

## Description

### BACKGROUND OF THE INVENTION

### Field of the Invention

The present invention relates to a client-server-communication system comprising at least one internet-based client, at least one intranet-based server located in a common intranet system and a proxy server.

### Background Art

Proxy servers are components of a client-server-communication system which allow direct internet access from behind a firewall. They open a socket on the server and allow communication via said socket to the internet. Accordingly the main function of the proxy server is to assure a secure, reliable and resource-saving connection between a client computer to a server computer and vice versa. Established and well-known technologies for the communication, like Secure Software Layer (SSL) from Netscape Communications Corp., Mountain View, California (USA), SaveWordPremierAccess from Secure Computing Corp., San Jose, California (USA) or SecureID from RSA Security Inc., Bedford, Massachusetts (USA) are made use of. Wherever necessary, such client-server-communications underlie certain protocol routines like RDP of Microsoft Corporation, Redmond, WA, USA. As underlying networking protocol usually TCP/IP is used within such client-server-communication systems.

In the prior art each server in an intranet-system is connectable to a certain proxy server. If an internet-based client in the internet surroundings requires a connection to a certain intranet-based server it approaches the proxy server associated to the intranet-based server by a defined IP-address whereafter the proxy server provides for the communication connection between the client and the server across the intranet firewall system. Inasmuch there is a strict coupling between one proxy server and the intranet-based server behind it and no "crosswise" connection between the intranet-based servers and the associated proxy servers is available. This makes this client-server-communication system somewhat inflexible and susceptible to e.g. overload conditions.

### SUMMARY OF THE INVENTION

It is an object of the invention to provide for a client-server-communication system which is improved as concerns the reliability, flexibility and security. Furtheron the system should run in resource-saving manner due to the system structure.

This object is achieved by a client-server-communication system comprising at least one internet-based client, at least one intranet-based server located in an intranet system, a demilitarized zone between an outbound firewall system towards the internet and an inbound firewall system towards the intranet system, and a proxy server located in the demilitarized zone and providing for any communication connection, to the at least one intranet-based server, required from one of the internet-based clients.

First of all the location of the proxy server in the demilitarized zone means enhanced security as the proxy server can be shut off both in the direction of the intranet by the inbound firewall and the internet by the outbound firewall. Accordingly no direct access from the client via the proxy server to a certain server is possible, as the proxy server alternatingly establishes communication connections to the required server via the inbound firewall on the one hand and to the client via the outbound firewall on the other hand. Inasmuch in each instance at least one of the both firewalls are closed making unauthorized access to a server considerably more difficult than compared to the prior art.

A further aspect of the system architecture according to the invention is the fact that between the internet and the intranet - although the latter can comprise more than one server - only one communication port per proxy server has to be opened in the outbound firewall. As furtheron the proxy server is located in the demilitarized zone which acts as a security buffer between the world-spanning internet and a company's intranet security aspects are optimally met with.

Preferred embodiments of the invention refer to how client computers connect to one or more proxy servers and how these components interact. Further aspects of the preferred embodiments refer to the way how the proxy servers find the corresponding server components and how they enforce security by authenticating a client. Preferred embodiments also refer to the optimization of the security and performance by scanning and manipulating the data stream between internet-based clients and intranet-servers. Finally preferred embodiments of the invention are related to use the client-server-communication system also for establishing a communication link between an internet-based client and an intranet-based single user server realized by a desktop PC which supports terminal services or remote control services like MS Windows XP. The according embodiments of the invention offer a functionality of the proxy server inasmuch as the desktop PC related to a user identification is accessible even if the desktop PC is switched off by means of a Wake-on-LAN-support. By this a person can access and work with his desktop PC from home or while travelling using a WAN connection like the internet.

### BRIEF DESCRIPTION OF THE DRAWINGS

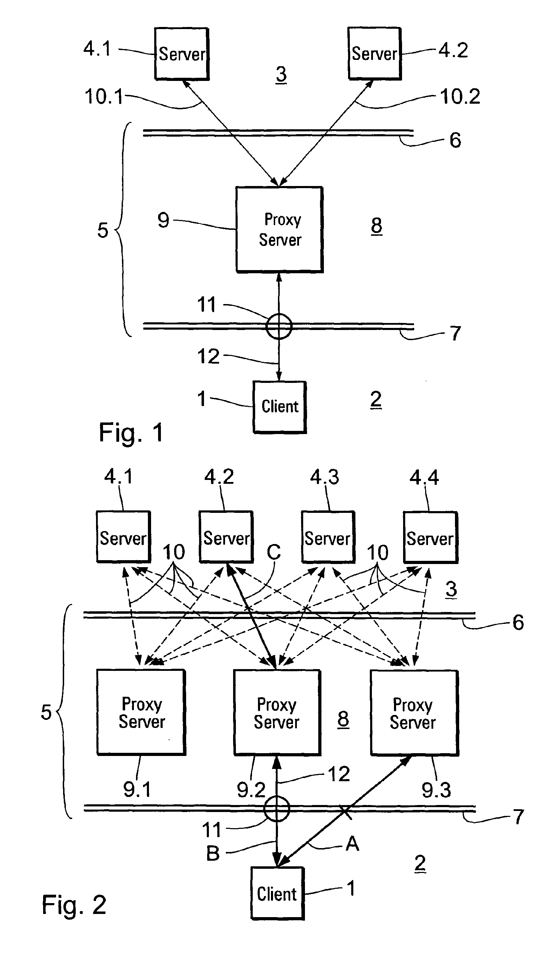

Figs. 1 through 12 show schematic diagrams of client-server-communication systems in various embodiments and communication steps.

### DESCRIPTION OF THE PREFERRED EMBODIMENTS

Referring to Fig. 1 a client-server-communication system comprises at least one internet-based client 1 which computer is incorporated anywhere in the world-spanning internet 2.

In an intranet-system 3 which may be established as a local area network in a company two intranet-based servers 4.1, 4.2 are installed, which computers are adapted to fulfil certain functions for or react to certain requests of the internet-based client 1.

The intranet-system 3 is separated from the internet 2 by a firewall 5 which comprises an inbound firewall system 6 towards the intranet-system 3 and an outbound firewall system 7 towards the internet 2. The inbound and outbound firewall system 6, 7 confine the so-called demilitarized zone 8 which is used by the company having installed the intranet-system 3 to prevent unauthorized access to this intranet-system 3.

Now in this demilitarized zone 8 a proxy server 9 is located which provides for any communication connection between a client 1 and at least one of the intranet-based servers 4.1, 4.2. For this sake the proxy server 9 can address both intranet servers 4.1, 4.2 via according IP connections 10.1, 10.2. Thus the proxy server 9 handles all necessary communication connections between the outbound internet 2 and the inbound intranet-system 3. Due to the proxy server 9, however, only one port 11 has to be opened in the outbound firewall system 7 to establish the outbound connection 12 between the client 1 and the proxy server 9. This connection 12 uses the SSL technology for an encryption of the communication between said components.

In case that one proxy server 9 is installed in the demilitarized zone there is the problem that upon failure of this single proxy server 9 a communication between the internet 2 and the intranet-system 3 would be impossible. To avoid this single point of failure according to a preferred embodiment depicted in Fig. 2 a plurality of three proxy servers 9.1, 9.2, 9.3 is installed in the demilitarized zone 8 between the inbound firewall system 6 towards the intranet-system 3 and the outbound firewall system 7 towards the internet 2. All these proxy servers 9.1, 9.2, 9.3 are again able to install and handle inbound connections 10 to each of the plurality of intranet-servers 4.1 through 4.4 in the intranet-system 3.

Now in case that client 1 requires a connection to e.g. server 4.2 first of all client 1 is randomly electing one of the available proxy servers 9.1, 9.2, 9.3 e.g. by creating a random number between 1 and 3. Having created "3" the client 1 tries to connect to proxy server 9.3. In case this connection fails (see "A" in Fig. 2) then client 1 creates another random number associated to the remaining proxy servers 9.1, 9.2, for example the number "2". In the case depicted in Fig. 2 the connection 12 to the proxy server 9.2 can be established (see "B" in Fig. 2) and the latter initiates and handles the further inbound connection 10 (see "C" in Fig. 2) to the intranet-server 4.2.

As can be seen from the foregoing in a client-server-communication system comprising a plurality of internet-based clients 1, a plurality of proxy servers 9.1, 9.2, 9.3 and a plurality of intranet-based servers 4.1, 4.2, 4.3, 4.4 due to the random election of proxy servers 9 there is a kind of load balancing because the connections 10, 12 to be initiated will be distributed randomly among the available proxy servers 9.1 through 9.3.

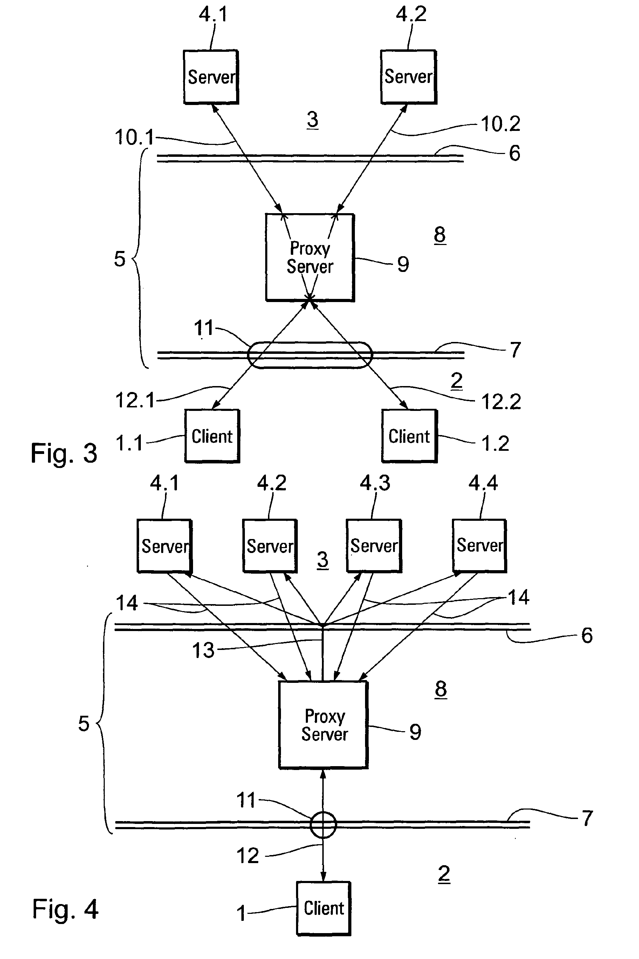

Referring to Fig. 3 preferred special modes of the client-server-communication system can be explained in more detail. These special modes are relevant in connection with IT system products of the applicant which are e.g. the Enhanced Terminal Services of HOB GmbH & Co. KG, 90513 Zirndorf, Germany, defining intranet-based servers 4.1, 4.2 as basic modules for enhanced terminal services and the clients 1.1 and 1.2 as Windows terminal server clients. Running in this mode the proxy server 9 arranged in the demilitarized zone 8 allows the clients 1.1, 1.2 (Windows terminal server clients) to use functionalities like load-balancing and application publishing across the inbound and outbound firewall system 6, 7 across the boarders of the demilitarized zone 8. Load balancing is disclosed and fully described in the applicant's co-pending US patent application 09/702 666 of November 1, 2000 the contents of which is fully incorporated herein by way of reference. The connections 12.1, 12.2 between the clients 1.1, 1.2 in the internet 2 and the proxy server 9 are secured by using SSL technology while the communication connections 10.1, 10.2 with the intranet-based servers 4.1, 4.2 located in the intranet-system 3 are initiated without using additional encryption besides e.g. the ordinary encryption required by the RDP protocol. Again all outbound connections 12.1, 12.2 under SSL technology to multiple clients 1.1, 1.2 are run over one single port 11.

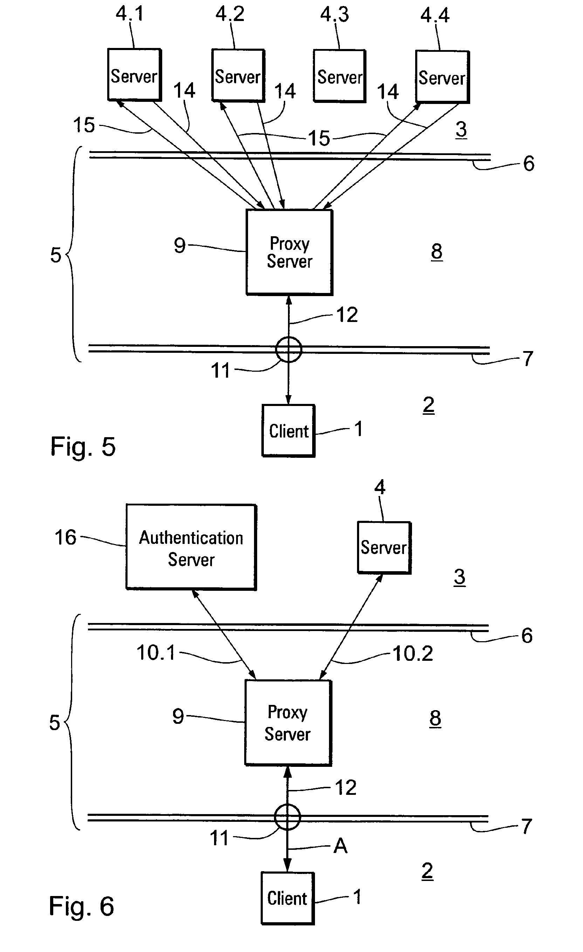

Now turning to Figs. 4 and 5 building up the communication of a client 1 to one of the intranet-servers 4.1 through 4.4 (each configured as Windows terminal servers comprising the applicant's basic module for enhanced terminal services/BMETS) is explained. At first the internet-based client 1 opens a connection 12 using SSL technology to the proxy server 9 and sends a request that it wants to be connected to one of the intranet-based servers 4.1 through 4.4. A message will be included by the client 1 that load-balancing or application publishing is to be effected and which of these methods should be used to select the intranet-based servers 4.1 through 4.4. Additionally, the internet-based client 1 might send a user identification code and a corresponding domain name to help the intranet-based servers 4.1 through 4.4 to find so-called disconnected sessions under the Windows Terminal Servers.

Then the proxy server 9 contacts the intranet-based servers 4.1 through 4.4 which can be done by two different ways. As is shown in Fig. 4 the proxy server 9 sends a broadcast 13 to all servers 4.1 through 4.4 which are answering by sending back messages under the user datagram protocol (=UDP), which messages are referred to as UDP packets 14.

As will be described lateron the contents of the UDP packets 14 can be taken as a basis for selecting which of the intranet-based servers 4.1 through 4.4 are connected to the client 1.

In case a list of the servers 4.1 through 4.4 is deposited within the proxy server 9 the latter is able to send defined UDP packets 15 to selected intranet-based servers 4.1, 4.2, 4.4, as can be seen in Fig. 5.

Now there are various alternatives for the basis for the decision which intranet-based server 4.1 through 4.4 is to be connected to the client 1:
- If the client 1 requested the names of all available servers 4.1 through 4.4 from the proxy server 9 the server responses in form of the UDP packets 14 are completely handed on to the client 1 which decides and notifies to the proxy server 9 to which of the servers 4.1 through 4.4 a connection is to be established. In case that so-called disconnected sessions are present on e.g. the intranet-based server 4.1 the client 1 might choose this server 4.1 and sends an according connection request to the proxy server 9 via a SSL-connection. The proxy server 9 in turn establishes the inbound connection 10.1 to this chosen server 4.1 via an IP-connection.
- In case the client 1 requested a connection to the server which is responding first then the proxy server 9 addresses the intranet-based servers 4.1 through 4.4 via broadcast 13 or UDP packets 14 and checks which of the servers 4.1 through 4.4 answered first. Inasmuch the proxy server 9 sends the response of the first server to the client 1 which re-sends a request for a connection to the proxy server. In case a disconnected session was requested by the client only the response from the first server who has such disconnected session loaded is transmitted from the proxy server 9 to the client 1. The latter will then send a connection request to the proxy server to be connected to the according intranet-based server.
- In case the client 1 requested a connection to the one of the servers 4.1 through 4.4 with the least workload the proxy server 9 queries the servers again by broadcast 13 or UDP packets 14 indicating to be supplied with the workload information of each server 4. The servers 4.1 through 4.4 respond by sending according connection and workload information to the proxy sever 9 which sends the response of the server with the least workload to the client 1. Again, if a disconnected session was requested by the client 1, the response from a server who has such disconnected session is handed on from the proxy server 9 to the client 1. After having found the server with the least workload a connection to this server is established between the client 1 via the proxy server 9 to this intranet-based server, e.g. 4.1 of Fig. 4 or 5.

Now turning to Fig. 6 a further option for the client-server-communication system according to the invention is to be explained. To further enhance security the proxy server 9 supports known technologies which allow for authenticating the client 1 to the proxy server 9. Commonly available technologies are e.g. SafeWordPremierAccess from Secure Computing or SecureID from RSA Security. Both products are already mentioned above. For this sake in the intranet system 3 an authentication server 16 is installed running SafeWordPremierAccess or SecureID software. Now in case of a client 1 which is to be securely identified this client 1 is sending a required authentication information (see "B" in Fig. 6) either of himself or as a response to an according demand from the proxy server 9 to the latter. To exchange this authentication information the so-called Socks Protocol (RFC 1928) is used. The proxy server 9 then sends the authentication information via inbound connection 10.1 to the authentication server 16 within the intranet system 3 where the authentication information is checked. The proxy server 9 is informed about the result of this process.

The client 1 is informed about the result of the authentication process via the outbound SSL-connection 12. If authentication was successful the proxy server 9 establishes the requested inbound connection 10.2 to the intranet-based server 4.1. If the authentication was not successful the outbound connection 12 between the proxy server 9 and the client 1 shuts down.

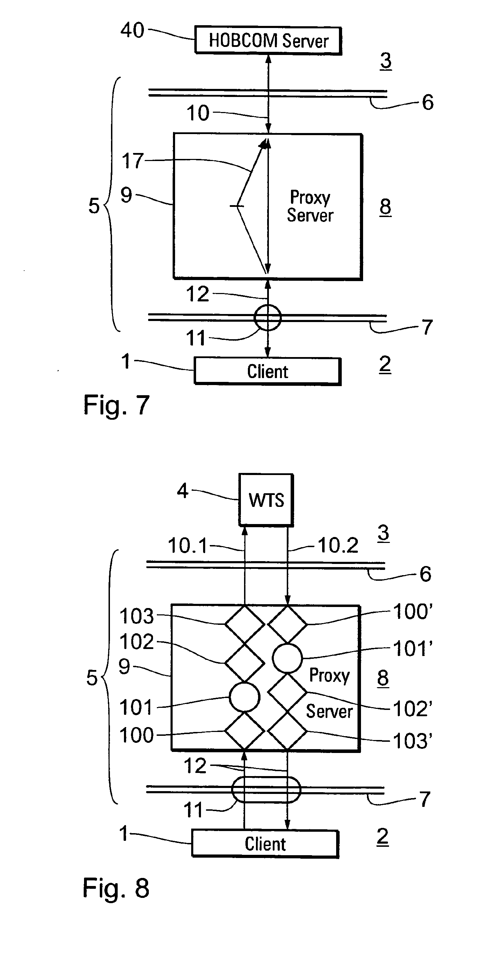

Referring now to Fig. 7 a further option for the client-server-communication system is to be explained which is relevant under the applicant's communication and dialogue system HOBCOM. The intranet-based server running under HOBCOM is represented by box 40. Now to help to authenticate the client 1 to the HOBCOM server 40 the proxy server 9 adds two escape-sequences to the data stream which contain the IP-address and the distinguished name of the respective client 1. The addition of escape-sequences is represented by bent arrow 17 in Fig. 7. The aforesaid information is derived by the proxy server 9 from the certificate used for the SSL-connection between the clients 1 and the proxy-server 9. After the session analysis with the addition of two escape-sequences the connection between proxy server 9 and HOBCOM server 40 on the one hand and the client 1 on the other hand is handled as described above.

Referring to Fig. 8 as further option of the client-server-communication system validating and optimizing the data stream between the client 1 and intranet-based servers 4 are to be explained. Fig 8 shows one of these servers 4, which may be so-called Windows Terminal Servers (WTS). Now to achieve additional security and to optimize the data stream via the outbound connections 12.1, 12.2 and the inbound connections 10.1, 10.2 the proxy server 9 is configured to scan and manipulate the data stream. In a step 100 the proxy server 9 decrypts the incoming data via connection 12.1 (step 100). Afterwards in step 101 the proxy server 9 analyses the decrypted data e.g. the proxy server 9 checks if in case that the communication is handled under RDP, the incoming data stream is based on valid RDP data. Wrong data sent to the intranet-based server 4 might cause this server 4 to fail upon which many users might be affected. Inasmuch the server 4 is protected from invalid data by cutting the connection 12.1 to the client 1 in case the latter sends invalid or erroneous data. Furtheron the proxy server 9 can block functions which are requested by the client. To this effect in the proxy server 9 a set of functions which have to be blocked can be defined by an according proxy server configuration. If in this case the client 1 tries to use one of these functions the proxy server 9 determines the according request by the analysis (step 101) and deletes this request from the data stream to the server and adds a negative response to the client-bound data stream (outbound connection 12.2) if appropriate.

To minimize the data sent to the intranet-based server 4 and thus saving bandwidth and improving performance the proxy server 9 optimizes the data stream to be sent to the client (step 102). For example the proxy server 9 can keep the screen data of an image sent to the client and compares these data to new data for an amended screen image. Only those parts of the screen image data that are really changed are then sent to the client decreasing the data volume to be transferred substantially. The image data handling is subject matter of the co-pending US patent application Ser. No. 09/805 475 of the applicant. Finally the data to be sent to the intranet-based server 4 can be encrypted (step 103) to further enhance security.

Concerning the data stream from the intranet-based server 4 via the proxy server 9 to the client 1 the according step 100' of decryption, 101' of analysis, 102' of optimizing and 103' of encryption are applied vice versa and do not need repeated explanation.

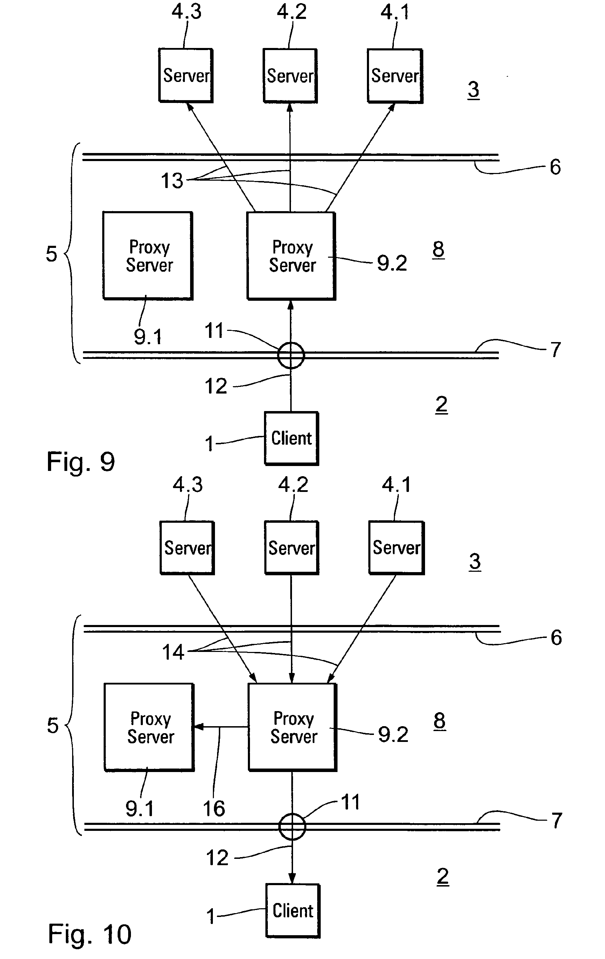

Based on Fig. 9 through 11 functionality of the client-server-communication system is to be explained with a load balancing for servers with terminal server functionality restricted to a single user. As a background attention is to be drawn that like terminal server operating systems some windows single user operation systems, e.g. windows XP Professional, also offer terminal services using the RDP protocol. However, unlike real terminal servers each of these windows stations only allow for a single user to connect. Depending on the IT environment it seems to be more efficient to create processing power with higher performance by grouping a number of smaller stations together than to realize one bigger machine. Accordingly it is preferred to group a number of stations running such a single user terminal server together than to build one big multi-user terminal server. This especially applies if so-called blade servers are used. Such blade servers are built as a single assembly unit a plurality of which are put together in a group in a small cabinet.

Now the proxy server concept of this invention can be used to imitate the functionality of a multi-user terminal server with such a group of single user stations. As a basis each intranet-based Windows terminal server 4.1, 4.2, 4.3 (see Fig. 9 through 11) runs the so-called "HOB blade balancer" system of the HOB electronic GmbH & Co. KG. This system checks whether a user is logged to a particular one of the single user servers 4.1, 4.2, 4.3 or not. If an internet-based client 1 sends a connection request to one 9.2 of both the proxy servers 9.1, 9.2 located in the demilitarized zone 8 between the internet 2 and the intranet 3 the proxy server 9.2 sends a query or a broadcast 13 to the single-user servers 4.1, 4.2, 4.3 (see Fig. 9) to find out, which of the servers are already in use and which are free to connect to the waiting client server 1. The Windows terminal servers 4.1, 4.2, 4.3 running under the HOB blade balancer again send UDP-packets 14 as a response indicating whether the respective server is already in use or not (Fig 10). If the machine is already occupied the HOB blade balancer sends a "work load" of 100 % or does not respond to the proxy server 9.2 if the machine is available. A UDP-packet information of 0 % is sent by default.

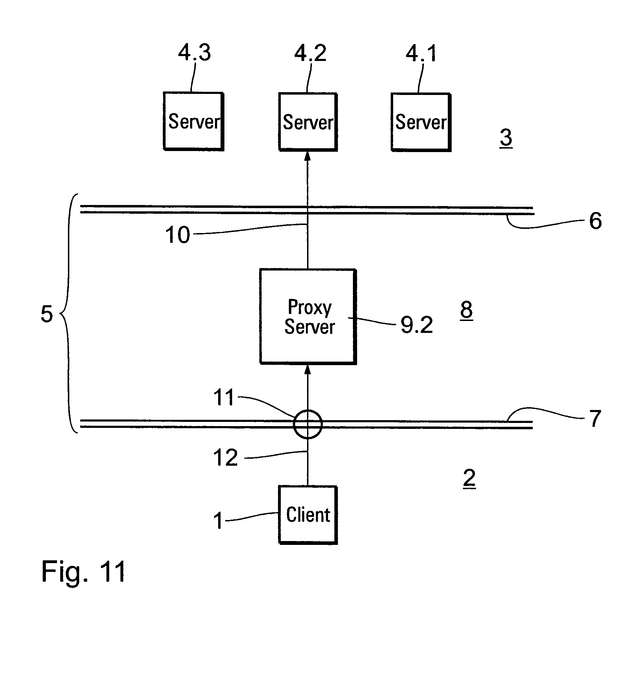

In case that the intranet-based servers 4.1, 4.2, 4.3 in this group of servers are not of the same processing performance the HOB blade balancer can be configured to send a different "work load value" depending on the processing server power if the server is not in use. For e.g. two types of servers with a higher and a lower processing performance in a group the blade balancer on the more powerful server is configured to send a 0 % work load value if it is available while on the less powerful server a 50 % work load value is sent. Thus if an internet-based client 1 requests a connection via the proxy server 9.2 it would be connected to that server which is reported to be the most powerful (means least work load value) server. This system state is again depicted in Fig. 11 by the outbound connection 12 between the internet based client server (a HOB Windows terminal server client) and a proxy server 9.2 and furtheron the inbound connection 10 between the proxy server 9.2 and the HOB blade balancer configured intranet-based Windows terminal server 4.2 of the group of servers 4.1, 4.2, 4.3.

In the client-server-communication system especially according to Fig. 9 through I 1 there might further arise an allocation problem during the process of selecting an appropriate server 4 for a client 1, since until the client 1 has successfully signed on to a particular server 4 another client (not shown in Fig. 9 through 11) might send a connect request to a proxy server 9.1 which considers a particular server already depicted by another proxy server 9.2 as still available. In that case when targeting the second client to the same server, e.g. 4.2 one of the clients would not be able to connect successfully to the server 4.2. To avoid this problem the proxy server 9.2 logs the address of a server, e.g. server 4.2, selected for a pending client request for a certain amount of time, e.g. 120 seconds from being distributed to incoming further requests. This means that the proxy server 9.2 blocks the intranet-based server 4.2 selected for serving a certain client against further allocation to subsequent requests.

In case of more than one proxy server, as is depicted in Fig. 9 through 11 showing proxy servers 9.1 and 9.2 for avoiding a single point of failure aforesaid problem still exists in case that both the proxy servers 9.1, 9,2 would receive connect requests from client servers 1 at approximately the same time and would both direct this client to the same intranet-based server 4.2 leading to the result the one of the clients could not be connected successfully to the server.

To avoid this situation each proxy server, e.g. 9.2 in Fig. 10, sends a UDP-packet 16 containing the IP address of its selected server 4.2 to other proxy servers, namely 9.1 in Fig. 10. As there is a short time between the moment a proxy server 9.2 selects an intranet-based server 4.2 and a possible reception of such a UDP-packet 16 by the others proxy server 9.1 each proxy server 9.1, 9.2 waits for a short period - the so-called trimming delay - before it connects the client 1 to the selected server 4.2. If during the trimming delay a UDP-packet 16 containing the information that the selected server is already reserved by another proxy server, is received, another server 4.3 is selected and the same allocation process described above is started again with a IP address of a now selected intranet-based server 4.3. Summarizing said functionality the proxy server 9.2 communicates an intranet-server-occupied-message to the remaining proxy server 9.1 blocking the intranet-based server 4.2 selected for serving the client 1 via proxy server 9.2 against further allocation to requests from the other proxy server 9.1.

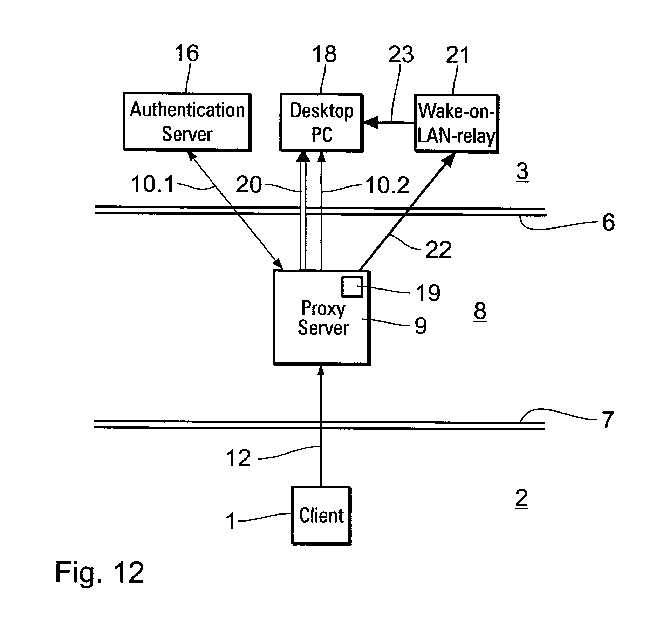

The communication system depicted in Fig. 12 again comprises an internet-based client 1, e.g. a HOB Windows terminal server client which communicates via outbound connection 12 using the SSL technology with proxy server 9 located in the demilitarized zone 8 between the inbound and outbound firewall systems 6, 7. Now the client 1 is to be connected to a certain desktop PC 18 which offers support for terminal services or other remote services to be implemented on desktop PC 18. The problem is to find the desktop PC, which belongs to a certain user trying to work on desktop PC from the intranet via a client 1. This means that the IP-address which corresponds to the user identification of the user must be known to the system. To achieve this in the proxy server 9 a list of user identifications each with its corresponding IP-address and -port are stored in an internal user database 19 held by the proxy server 9. In case a user connects to proxy server 9 from client 1 via the SSL-connection 12 he has to transmit the user identification and password to allow the secure proxy 9 to find the appropriate IP-address and authenticate the user. Alternatively or additionally authentication can also be handled with the help of an authentication server 16 as is basically disclosed in Fig. 6. This authentication server 16 can be a so-called radius server or a common server using authentication software like SecureID or SaveWordPremierAccess already mentioned. If authentication was successful the proxy server 9 connects to the desktop PC 18 via inbound connection 10.2.

In case the BIOS, motherboard or network adapter of the desktop PC 18 supports a Wake-on-LAN functionality the proxy server 9 is able to access the desktop PC 18 even if it is not switched on. To accomplish this the so-called MAC-address of the desktop PC 18 configured to support Wake-on-LAN has to be entered into the proxy server configuration. In case a radius server is used for authentication the MAC-address might be configured at the radius server.

When the client 1 tries to access the desktop PC 18 the proxy server 9 sends a Wake-on-LAN UDP broadcast packet 20 to desktop PC 18 which packet contains the MAC-address of desktop PC 18. In case of failure another Wake-on-LAN UDP broadcast packet 20 is transmitted. Afterwards the client 1 starts trying to connect to desktop PC 18 via proxy server 9. As the latter does not know when said desktop PC 18 will be able to support the inbound connection 10.2 it tries to connect to the desktop PC 18 in regular intervals when starting up until a connection is established.

Prior to every connection attempt a name resolution is repeated since the address might only be available after the TCP/IP stack of the desktop PC 18 has been established, if e.g. DHCP is used. Connection attempts will stop immediately when a serious network error occurs. Furtheron connection attempts are only repeated as long as the preceding attempt failed with either a connection time-out or the connection being refused by the client 1. A time limit value entered into the proxy server configuration will limit the amount of time spent for trying to connect. If the configured time period has passed the proxy server 9 stops trying to connect to desktop PC 18 and passes an unable to connect message to client 1.

Since UDP broadcasts do not work in certain network environments or through a firewall configured accordingly the proxy server 9 contacts an additional Wake-on-LAN-relay software 21 which has to run in the same network environment as the desktop PC 18. Now in case of an active Wake-on-LAN functionality after successful authentication the proxy server 9 sends a UDP monocast packet 22 directly to the Wake-on-LAN-relay software 21. This packet contains the MAC-address of the desktop PC 18 to be waked up. Then Wake-on-LAN-relay software 21 sends the UDP broadcast 23 "awaking" desktop PC 18. Afterwards the proxy server can try to connect to desktop PC 18 via inbound connection 10.2 as described above.

## Claims

1. A client-server-communication system comprising
- at least one internet-based client (1),
- at least one intranet-based server (4, 40) located in an intranet system (3),
- a demilitarized zone (8) between an outbound firewall system (7) to the internet (2) and an inbound firewall system (6) to the intranet system (3), and
- a proxy server (9) located in the demilitarized zone (8) and providing for any communication connection (10, 12), to at least one of the intranet-based server (4, 40), required from one of the internet-based clients (1).

2. A client-server-communication system according to claim 1, comprising a plurality of proxy servers (9) in the demilitarized zone (8), each of said proxy servers (9) being connectable to each of said intranet-based servers (4) and to a internet-based client (1) connecting to one of said proxy servers (9) which provides for a communication connection (10) to one of said intranet-based servers (4).

3. A client-server-communication system according to claim 2, wherein an internet-based client (1) is randomly electing one of said proxy servers (9) for providing for a communication connection (10, 12) to one of said intranet-based servers (4).

4. A client-server-communication system according to claim 1, wherein the at least one internet-based client (1) connects to at least one of the proxy servers (9) requesting a communication connection (10) to an intranet-based server (4), wherein the proxy server (9) contacts the intranet-based servers (4) for them resending response messages (14) as basis for establishing the communication connection (10) to one of the intranet-based servers (4).

5. A client-server-communication system according to claim 4, wherein the response messages are sent back to the internet-based client (1), which according to the response messages (14) instructing the proxy server (9) to establish a communication connection (10) to a certain intranet-based server (4).

6. A client-server-communication system according to claim 5, wherein a communication connection (10) is established to the intranet-based server (4) which answered first.

7. A client-server-communication system according to claim 5, wherein a communication connection (10) is established to the intranet-based server (4) which has reported to have the least workload.

8. A client-server-communication system according to claim 1, wherein the internet-based client (1) sends a user identification code to the at least one proxy server (9).

9. A client-server-communication system according to claim 4, wherein the proxy server (9) sends a broadcast (13) to all intranet-based servers (4) seeking said responses.

10. A client-server-communication system according to claim 4, wherein the proxy server (9) contacts intranet-based servers (4) selected by the internet-based client (1) for resending response messages (14) as basis for establishing the communication connection (10) to one of the selected intranet-based servers (4).

11. A client-server-communication system according to claim 1, further comprising an intranet-based authentication server (16), which is contacted by the proxy server (9) for authentication of an internet-based client (1) requesting a communication connection (10) to one of said intranet-based servers (4).

12. A client-server-communication system according to claim 1, wherein the at least one proxy server (9) is adding at least one escape sequence (17) comprising client information data to any data stream being sent to at least one of the intranet-based servers (40) concerning establishment of the required communication connection.

13. A client-server-communication system according to claim 1, wherein the at least one proxy server (9) evaluates and if necessary optimizes any data stream along the communication connection.

14. A client-server-communication system according to claim 1, wherein the at least one proxy server (9) handles the client-server-communications between an internet-based client (1) and a group of single user servers (4) according the functionality of a multiuser terminal server.

15. A client-server-communication system according to claim 14, wherein upon request for a communication connection by an internet-based client (1) the proxy server (9.2) blocks the intranet-based server (4.2) selected for serving against further allocation to subsequent requests.

16. A client-server-communication system according to claim 14, comprising at least two proxy servers (9.1, 9.2) in the demilitarized zone (8), wherein one (9.2) of said proxy servers (9.1, 9.2), handling a request for a communication connection by an internet-based client (1), communicates an intranet-server-occupied-message to the remaining proxy servers (9.1) blocking the intranet-based server (4.2) selected for serving against further allocation to requests from the remaining proxy servers (9.1).

17. A client-server-communication system according to claim 1, wherein said at least one intranet-based server is realized by a desktop PC (18) supporting at least one of terminal services and remote control services.

18. A client-server-communication system according to claim 17, wherein a client (1) is authorized by said proxy server (9) by checking an internal user data base (19) implemented in the proxy server (9) or by connecting to an intranet-based authentication server (16).

19. A client-server-communication system according to claim 17, wherein the proxy server (9) communicates with said desktop PC (18) directly or via a Wake-on-LAN-relay (21) located in said intranet system (3).
